# FASCICULE DE BREVET EUROPEEN

(11) **EP 2 861 022 B1**
(45) Date de publication et mention de la délivrance du brevet: **21.08.2019**
(21) Numéro de dépôt: 14188342.1
(22) Date de dépôt: 09.10.2014
(51) Int. Cl.: H04W 48/20, H04W 84/18, H04W 88/04

(54) **Procédé d'attachement dans un réseau mobile ad hoc à base de technologie cellulaire**
Verfahren zur Teilnahme an einem Ad-hoc-Netzwerk auf der Grundlage der Mobilfunktechnologie
Method for registration in an ad hoc mobile network based on cellular technology

(30) Priorité: 09.10.2013 FR 1302346
(43) Date de publication de la demande: 15.04.2015
(73) Titulaire: Thales, 92200 Neuilly Sur Seine (FR)
(72) Inventeur: Leguay, Jérémie, 92622 GENNEVILLIERS CEDEX (FR); Boite, Julien, 92622 GENNEVILLIERS CEDEX (FR); Hethuin, Serge, 92622 GENNEVILLIERS CEDEX (FR)
(74) Mandataire: Lavoix

(56) Documents cités:
- EP-A1- 1 936 872
- WO-A1-2010/019395
- US-A1- 2003 179 742
- US-A1- 2011 164 527

## Description

La présente invention concerne un procédé d'attachement dans un réseau mobile ad hoc à base de technologie cellulaire sans-fil, et, plus particulièrement dans un réseau du type comportant une pluralité de noeuds, chaque noeud comportant un module de point d'accès, au moins un module de terminal relais et des moyens d'émission/réception d'ondes radioélectriques, le module de terminal relais d'un noeud étant, à chaque instant, soit non attaché, soit attaché à un module de point d'accès d'un autre noeud du réseau.

Un tel réseau est par exemple décrit dans le document EP 1 936 872 A1, qui constitue l'état de la technique le plus proche.

Par « technologie cellulaire sans-fils », on entend une technologie telle que définie par la norme WiFi, la norme WiMAX, la norme LTE ou des normes du même type.

Le module de terminal relais (module RT dans ce qui suit pour l'acronyme anglais « Relay Terminal ») d'un premier noeud est apte à initier un processus d'attachement vers le module de point d'accès (module AP dans ce qui suit pour l'acronyme anglais « Access Point») d'un second noeud, qui est situé dans le voisinage radioélectrique du premier noeud (c'est-à-dire dans une cellule de couverture du premier noeud), le second noeud étant de ce fait dit voisin du premier noeud.

A chaque instant, le module RT d'un noeud est soit non attaché, soit attaché à un module AP d'un autre noeud du réseau.

Le module AP d'un noeud est soit non attaché, soit attaché à un module RT, soit attaché à plusieurs modules RT.

Une fois un attachement établi, une communication bidirectionnelle entre les deux noeuds attachés peut avoir lieu. Cet attachement est éphémère et peut être rompu à tout instant, soit « volontairement » par un des noeuds qui « préfère » s'attacher à un autre noeud, soit « involontairement », lorsque les noeuds attachés s'éloignent l'un de l'autre et que la qualité de la communication établie se dégrade.

Le réseau se forme au grès des attachements entre les noeuds.

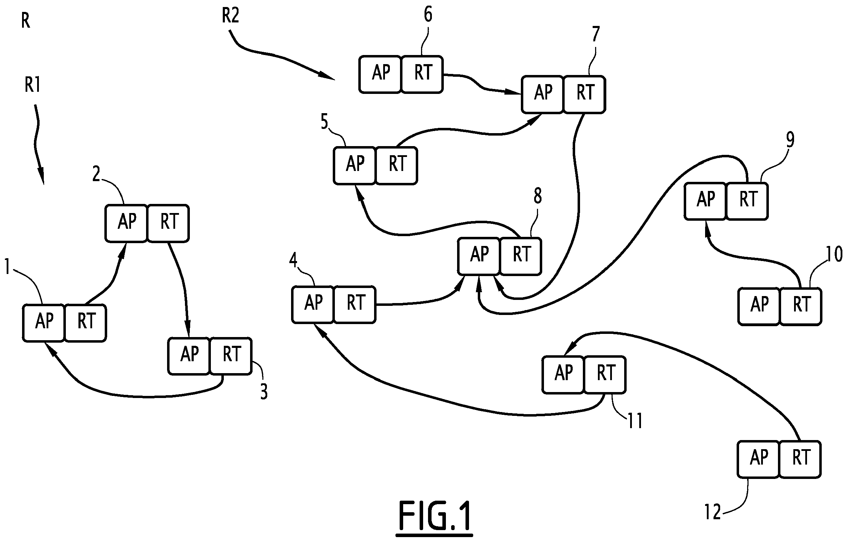

A un instant donné, le réseau présente une topologie définie par un graphe représentant les noeuds et les attachements existant entre ces noeuds. Un tel graphe est par exemple représenté sur la figure 1.

Dans un tel réseau, chaque noeud peut relayer une communication entre un noeud source et un noeud destinataire échangeant des données. Chaque noeud est ainsi propre à router un flux de données. Les documents US 2011/164527 A1, WO 2010/019395 A1 et US2003/179742 A1 décrivent ainsi des procédés de routage dans un réseau établi.

Selon l'art antérieur, y compris le document EP 1 936 872 A1, l'établissement d'un attachement entre deux noeuds s'effectue, en général, de la manière suivante.

Le module AP de chaque noeud émet périodiquement un signal de balise.

Dans ce cas, le module RT d'un noeud découvre périodiquement son environnement radioélectrique à la recherche de signaux de balise et détermine une liste des noeuds voisins.

Puis, le noeud sélectionne le noeud voisin auquel s'attacher sur la base d'un critère tel que la qualité de la réception du signal de balise, la hiérarchie prédéterminée entre les noeuds du réseau, l'historique d'utilisation du réseau (la probabilité d'attachement à un noeud dépend du nombre d'attachements à ce noeud dans le passé).

Une fois un noeud voisin sélectionné, le module RT est appelé pour initier le processus d'attachement vers le module AP du noeud voisin sélectionné. Le processus d'attachement mis en oeuvre entre le module RT et le module AP dépend de la technologie cellulaire mise en oeuvre. Le procédé d'attachement entre deux noeuds conduit à la création d'un lien de niveau 2 au sens du modèle OSI de description des différentes couches d'un réseau.

Cependant, la décision prise localement par un module RT d'initier ou non un processus d'attachement vers un noeud voisin plutôt qu'un autre, ne conduit pas forcément, à l'échelle du réseau, à l'obtention d'une connectivité globale maximale.

Par exemple, comme cela est illustré sur la figure 1, le réseau est subdivisé en plusieurs sous-réseaux ou composantes, indépendantes entre elles, bien qu'un noeud d'une composante soit en portée d'un noeud d'une autre composante et qu'en établissant un attachement entre ces deux noeuds, une meilleure connectivité réseau pourrait être obtenue. Ce cas est représenté sur la figure 1. Les noeuds 1 à 3 appartiennent à une première composante R1 du réseau R, alors que les noeuds 4 à 12 appartiennent à une seconde composante R2 du réseau R. Aucun noeud de la première composante ne peut échanger des données avec un noeud de la seconde composante. Cependant, les noeuds 3 et 4 sont en portée. Si un attachement existait entre ces deux noeuds, la connectivité globale du réseau s'en trouverait a priori améliorée, le nombre de paires de noeuds pouvant échanger des données augmentant.

Par exemple encore, les attachements successifs entre les noeuds du réseau peuvent conduire à ce que le chemin suivi par un flux de données depuis un noeud source vers un noeud destinataire, au sein d'une composante, soit plus long que nécessaire. Ainsi, dans la seconde composante R2 du réseau R représenté sur la figure 1, le chemin entre le noeud 12 et le noeud 10 est relativement long. Cependant, les noeuds 11 et 8 sont en portée et si un attachement existait entre ces deux noeuds, le chemin entre les noeuds 12 et 10 serait a priori fortement réduit. La réduction de la longueur moyenne des chemins participe à l'amélioration de la connectivité globale du réseau.

Il est à noter qu'une fois le procédé d'attachement réalisé pour établir un réseau particulier, défini par un graphe, un procédé de routage est mis en oeuvre au sein de ce réseau. Un tel procédé de routage, hors du cadre de la présente demande de brevet, peut par exemple être le procédé défini dans la demande US 2003/179742 A1, dans la demande WO 2010/019395 A1, ou encore dans la demande US 2011/164527 A1.

L'invention a donc pour but de palier aux problèmes précités associés au procédé d'attachement, en proposant notamment un procédé d'attachement permettant d'améliorer la connectivité globale du réseau.

L'invention a pour objet un procédé d'attachement dans un réseau mobile ad hoc à base de technologie cellulaire sans fil, du type comportant une pluralité de noeuds, chaque noeud comportant un module de point d'accès, au moins un module de terminal relais, un module de terminal relais d'un noeud étant apte à découvrir le module de point d'accès de noeuds voisins et à initier un processus d'attachement avec un module de point d'accès d'un noeud voisin sélectionné, un module de terminal relais d'un noeud étant attaché à au plus un module de point d'accès d'un noeud voisin, caractérisé en ce qu'il comporte une étape consistant à sélectionner un noeud voisin vers lequel un noeud considéré doit initier un processus d'attachement parmi les noeuds d'une liste résultant d'une étape de découverte, réalisée par le module de terminal relais du noeud considéré, et sur la base d'au moins une information de connectivité relative à la composante connexe du noeud considéré et d'au moins une information de connectivité relative à la composante connexe de chaque noeud voisin de la liste.

Alors que le procédé décrit dans le document EP 1 936 872 A1 se limite à empêcher l'attachement d'un module RT au module AP du même noeud, le présent procédé d'attachement est enrichit par des critères de sélection d'un noeud voisin et met en oeuvre un algorithme qui permet d'assurer une connectivité globale maximale entre les noeuds qui composent le réseau.

Suivant des modes de réalisation particuliers, le procédé comporte une ou plusieurs des caractéristiques suivantes, prise(s) isolément ou suivant toutes les combinaisons techniquement possibles :
- ladite au moins une information de connectivité d'un noeud est choisie parmi un nombre (ni) de noeuds présents dans la composante connexe du noeud, une liste des identifiants des noeuds présents dans la composante connexe du noeud, et un graphe de la composante connexe du noeud.
- chaque noeud ayant un module de topologie stockant un graphe de la composante connexe du noeud, le procédé comporte une étape d'interrogation du module de topologie pour obtenir le graphe courant de la composante connexe du noeud, une étape de calcul de ladite au moins une information de connectivité et une étape de transmission de la ou de chaque information de connectivité calculée.
- l'étape de transmission consiste à émettre, au moyen du module de point d'accès dudit noeud, un signal de balise comportant la ou chaque information de connectivité, et en ce que le procédé comporte, lors de l'étape de découverte par le module de terminal relais d'un noeud considéré, une étape de collecte de la ou de chaque information de connectivité d'un noeud voisin dont un signal de balise a été détecté par ledit noeud considéré.
- l'étape consistant à sélectionner un noeud voisin comporte une étape de vérification que le noeud voisin n'appartient pas à la composante connexe du noeud considéré et, dans l'affirmative, une étape de comparaison du nombre de noeuds présents dans la composante connexe du noeud voisin avec le nombre de noeuds présents dans la composante connexe du noeud considéré, le noeud voisin étant sélectionné lorsque le nombre de noeuds dans sa composante connexe est supérieur à celui dans la composante connexe du noeud considéré.
- l'étape consistant à sélectionner un noeud voisin comporte une étape de vérification que le noeud voisin n'appartient pas à la composante connexe du noeud considéré et, dans la négative, une étape de comparaison, d'une part, de la longueur moyenne des chemins dans la composante connexe du noeud considéré et, d'autre part, de la longueur moyenne des chemins sans la composante connexe du noeud considéré modifiée de telle sorte que le noeud considéré soit attaché au noeud voisin, le noeud voisin étant sélectionné lorsque la longueur moyenne des chemins dans la composante connexe du noeud considéré modifiée est inférieure à la longueur moyenne (yi) des chemins dans la composante connexe du noeud considéré.
- chaque noeud comportant un module de flux maintenant une liste des flux de données relatifs aux communications en cours relayées par ledit noeud récepteur, le procédé comporte, avant une étape consistant à commander le module de terminal relais du noeud considéré pour initier un processus d'attachement vers le module de point d'accès du noeud voisin sélectionné, une étape consistant à interroger le module de flux pour obtenir la liste des flux en cours, déterminer un nombre de flux de données en cours et vérifier que le nombre de flux en cours est inférieur à un seuil prédéterminé.
- l'étape de sélection est mise en oeuvre au niveau d'un central opérationnel, en communication avec chacun des noeuds du réseau et propre à transmettre à un noeud récepteur considéré l'identifiant du noeud voisin sélectionné auquel il doit se connecter.
- l'étape de sélection est mise en oeuvre au niveau de chaque noeud.

L'invention a pour objet un support d'enregistrement d'informations, caractérisé en ce qu'il comporte les instructions pour la mise en oeuvre d'un procédé d'attachement tel que défini plus haut, lorsque ces instructions sont exécutées par un calculateur.

L'invention a pour objet un système comportant une pluralité de noeuds, chaque noeud comportant un module de point d'accès, un module de terminal relais d'un noeud étant apte à découvrir le module de point d'accès des noeuds voisins et à initier un processus d'attachement avec un module de point d'accès d'un noeud voisin sélectionné, un module de terminal relais d'un noeud étant attaché à au plus un module de point d'accès d'un noeud voisin, caractérisé en ce qu'il est propre à mettre en oeuvre un procédé d'attachement conforme au procédé défini plus haut, le système comportant un moyen de sélection propre à sélectionner un noeud voisin vers lequel un noeud récepteur considéré doit initier un processus d'attachement parmi les noeuds d'une liste résultant d'une étape de découverte, par le module de terminal relais du noeud récepteur, et en considérant au moins une information de connectivité relative à la composante connexe du noeud considéré et une information de connectivité relative à la composante connexe des noeuds voisins mentionnés dans la liste.

De préférence, le module de point d'accès d'un noeud est propre à transmettre au moins une information de connectivité relative à sa composante connexe en utilisant un moyen d'émission /réception radio du module AP ou en utilisant un moyen d'émission/réception d'une autre technologie radio que celle mise en oeuvre pour le réseau ad hoc.

L'invention a pour objet un noeud comportant un module de point d'accès et au moins un module de terminal relais, le module de terminal relais du noeud étant apte à découvrir des modules de point d'accès de noeuds voisins et à initier un processus d'attachement avec un module d'un point d'accès d'un noeud voisin sélectionné, le module de terminal relais du noeud étant attaché à au plus un module de point d'accès d'un noeud voisin, caractérisé en ce qu'il est propre à faire partie du système défini plus haut.

L'invention sera mieux comprise et d'autres caractéristiques, buts et avantages de celle-ci apparaitront plus clairement à l'aide de la description qui va suivre d'un mode de réalisation particulier de l'invention et de plusieurs mises en oeuvre possibles, donnés uniquement à titre illustratif et non limitatif, en référence aux dessins annexés. Sur ces dessins :
- La figure 1 représente schématiquement le graphe d'un réseau mobile ad hoc à base de technologie cellulaire sans-fil ;
- La figure 2 est une représentation schématique de la structure d'un noeud d'un premier mode de réalisation d'un système pour la mise en oeuvre du procédé d'attachement selon l'invention ;
- La figure 3 est une représentation schématique, sous forme de blocs, d'un mode de réalisation d'un procédé d'attachement selon l'invention ;
- Les figures 4 et 5 sont des graphes représentant respectivement l'évolution au cours du temps du nombre de paires de noeuds pouvant communiquer et de la longueur moyenne des chemins dans un réseau dont les noeuds mettent en oeuvre le procédé d'attachement de la figure 3 ; et,
- La figure 6 représente un second mode de réalisation du système pour la mise en oeuvre du procédé de la figure 3.

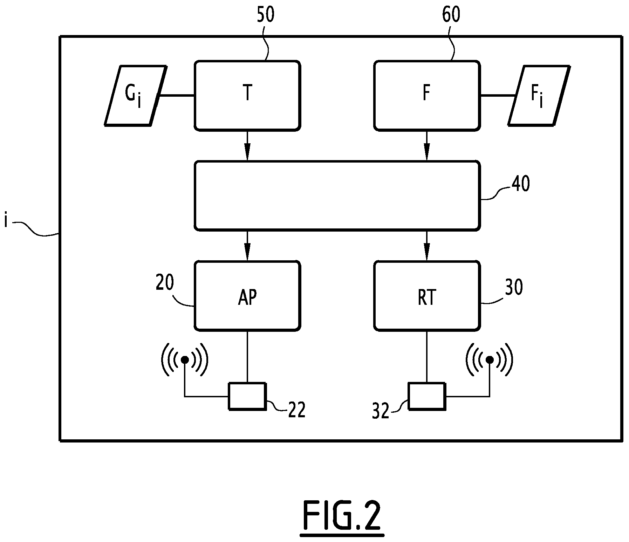

Un procédé d'attachement est mis en oeuvre dans un système comportant une pluralité de noeuds conformes au noeud i représenté schématiquement sur la figure 2.

Le noeud i comporte un module AP 20, un module RT 30, un module d'attachement 40, un module de topologie 50 et un module de flux 60.

Pour simplifier la description, dans ce qui suit, le module de point d'accès AP et le module de terminal relais RT d'un même noeud comportent chacun son propre moyen d'émission/réception d'ondes radioélectriques. Mais, des moyens d'émission/réception communs peuvent être envisagés.

Ainsi, le noeud i comporte un moyen d'émission/réception de signaux radio 22 associé au module AP 20 et un moyen d'émission/réception radio 32 associé au module RT 30.

Les modules AP 20 et RT 30 sont conformes à ceux de l'état de la technique.

Le module AP 20 est propre à commander son moyen d'émission/réception radio pour émettre périodiquement un signal radio de balise intégrant un message comportant, en particulier, des informations de connectivité transmises par le module d'attachement 40, comme cela sera présent ci-dessous.

Lorsqu'un module RT 30 d'un noeud j voisin du noeud i a détecté un tel signal de balise et y répond pour initier un processus d'attachement, le module AP 20 du noeud i est propre à exécuter les étapes du processus d'attachement qui lui incombent. Le processus d'attachement est conforme à un protocole défini par la technologie cellulaire utilisée.

Le module RT 30 d'un noeud i est propre à commander ses moyens d'émission/réception radio 32, de manière à scanne l'environnement radioélectrique du noeud i pour découvrir les modules AP 20 des noeuds j voisins. A l'issue du processus de découverte, le module RT 30 est propre à générer une liste Li des noeuds j voisins du noeud i, dont les signaux de balise ont été détectés. La liste Li comporte en particulier les informations de connectivité contenues dans le message dont est constitué le signal de balise.

Dans le présent mode de réalisation, le module RT 30 est propre à initier un processus de découverte lors de la réception d'une requête de découverte émise par le module d'attachement 40. En variante, le module RT 30 effectue périodiquement ce processus de découverte et met à disposition du module d'attachement 40 la liste Li.

Lors de la réception d'une requête d'attachement émise par le module d'attachement 40 et qui comporte l'identifiant j d'un noeud voisin, le module RT 30 d'un noeud i est propre à initier un processus d'attachement avec ce noeud voisin j. Plus particulièrement, le module RT 30 du noeud i est propre à exécuter les différentes étapes du processus d'attachement avec le module AP du noeud j, conformément au protocole prédéfini de la technologie cellulaire mise en oeuvre.

Le module de topologie 50 est propre à stocker un graphe Gi courant représentant la composante du réseau à laquelle appartient le noeud i à l'instant courant, dite composante connexe instantanée. Par graphe, on entend l'ensemble des identifiants des noeuds k sur le réseau et des attachements entre ces noeuds. Par composante connexe du noeud i, on entend l'ensemble des noeuds k auquel le noeud i peut échanger un flux de données, c'est-à-dire qu'il existe un chemin réseau entre le noeud i et chaque noeud k de sa composante connexe instantanée. Le module de topologie 50 fait partie des moyens de routage du noeud i. La manière dont s'effectue la mise à jour du graphe Gi est hors de la portée de la présente invention.

Le module de flux 60 du noeud i est propre à maintenir une liste Fi des flux de données en cours entre un noeud source et un noeud destinataire et qui sont relayés par le noeud i. Des données de traitement des flux sont également stockées dans la liste Fi. En particulier, une priorité associée à chaque flux de données est enregistrée.

Le module d'attachement 40 est propre à générer un message et à le transmettre au module AP 20 de manière à ce que ce dernier l'intègre dans le signal de balise périodiquement émis. Pour cela, le module d'attachement 40 est propre à appeler le module de topologie 50 pour obtenir le graphe Gi courant. Le module d'attachement 40 est alors propre à déterminer une information de connectivité à partir du graphe Gi.

Le message généré par le module d'attachement 40 intègre un identifiant du noeud i et au moins une information de connectivité. Dans le présent mode de réalisation, cette information correspond au nombre ni de noeuds présents dans la composante connexe du noeud i. En variante, cette information de connectivité correspond à une liste gi des identifiants des noeuds présents dans la composante connexe du noeud i, ou au graphe Gi courant du noeud i, ou à d'autres informations associées à la composante connexe du noeud.

Le module d'attachement 40 est également propre à lire la liste Li des noeuds j voisins résultant d'une requête de découverte appliquée au module RT 30. Parmi les données contenues dans cette liste Li, le module d'attachement 40 est propre à lire les informations de connectivité correspondant à l'identifiant j d'un noeud voisin et le nombre nj de noeuds dans la composante connexe du noeud j.

Le module d'attachement 40 est propre à appliquer une requête d'attachement au module RT 30 ayant comme paramètre l'identifiant j du noeud voisin sélectionner pour un attachement.

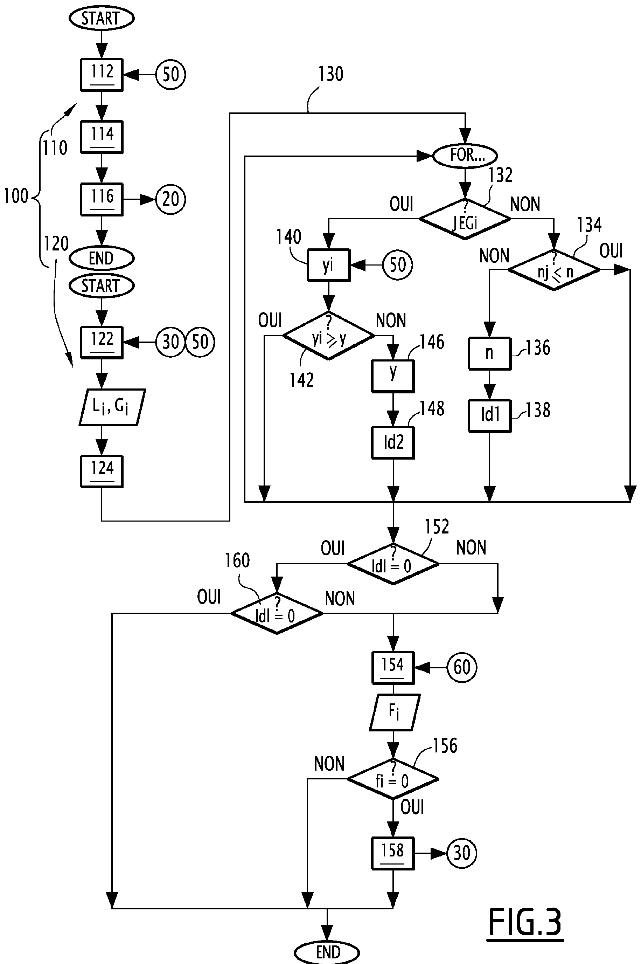

Le module d'attachement 40 du noeud i est propre à sélectionner le noeud voisin auquel s'attacher, en mettant en oeuvre un procédé d'attachement, tel que le procédé 100 représenté sur la figure 3, qui va maintenant être décrit.

Le procédé 100 comporte une première partie 110, réalisée en combinaison avec le module AP 20 du noeud i.

Dans une première étape 112 de cette partie 110, le module d'attachement 40 appelle le module de topologie 50 de manière à obtenir le graphe Gi courant. Le module d'attachement 40 calcule le nombre ni de noeuds faisant partie de sa composante connexe.

A l'étape 114, le module d'attachement 40 génère un message contenant l'identifiant du noeud i et la valeur du nombre ni calculée à l'étape 112.

A l'étape 116, le module d'attachement 40 transmet le message généré à l'étape 114 au module AP 20 pour que ce dernier l'émette périodiquement sous la forme d'un signal de balise.

Le procédé 100 comporte une seconde partie 120, réalisée en combinaison avec le module RT 30 du noeud i. Cette seconde partie 120 peut être mise en oeuvre après chaque réalisation de la première partie 110.

A l'étape 122, le module d'attachement 40 du noeud i commande le module RT 30 de manière à scanner l'environnement radioélectrique du noeud i.

Le module RT 30, après avoir scanné l'environnement radioélectrique à la recherche de signaux de balise émis par des noeuds j voisins, transmet au module d'attachement 40 une liste Li. Celle-ci comporte, pour chaque noeud voisin j découvert, les informations de connectivité émise par le module AP du noeud j (nombre nj de noeuds présents dans la composante connexe du noeud j).

A l'étape 122, le module d'attachement 40 du noeud i interroge également le module de topologie 50 et stocke le graphe Gi courant transmis dans la réponse reçue du module de topologie 50 (Cette étape est identique à l'étape 112 de la première partie 110).

Au début de l'étape 124, une variable n de nombre maximal de noeuds dans une composante connexe est initialisée à la valeur ni. La valeur ni est le nombre de noeuds présents dans le graphe Gi. Pour déterminer la valeur ni, le module de traitement 40 compte le nombre de noeuds dans le graphe Gi.

Une variable y de longueur moyenne des chemins dans une composante connexe est initialisée à la valeur yi. Pour obtenir la valeur yi, le module de traitement 40 calcule, après avoir appliqué au graphe Gi un algorithme, tel que l'algorithme Djikstra connu de l'homme du métier, la valeur moyenne yi de la longueur des chemins dans le graphe Gi.

Des variables Id1, Id2 et fi sont également initialisées à la valeur Nulle.

Le processus 100 entre alors dans une boucle 130 du type « FOR... DO...» indexée sur les identifiants j des noeuds de la liste Li.

A l'étape 132, le module d'attachement 40 vérifie si le noeud voisin j est présent dans le graphe Gi.

Si le noeud voisin j n'appartient pas à la composante connexe du noeud i, à l'étape 134, le module d'attachement 40 compare la valeur courante de la variable n avec le nombre nj de noeuds dans la composante connexe du noeud j, indiqué dans la liste Li.

Lorsque nj est supérieur à n, cela signifie que le noeud voisin j présente plus de noeuds dans sa composante connexe que le noeud i et qu'il conviendrait pour le noeud i de s'attacher au noeud voisin j pour augmenter la taille de sa composante connexe.

Alors, à l'étape 136, la valeur nj est affectée à la variable n et, à l'étape 138, l'identifiant j est affecté à la variable Id1.

A l'issue de l'étape 138, le procédé suit la boucle 130 pour traiter le noeud voisin suivant dans la liste Li.

Si à l'étape 134 le nombre nj est inférieur ou égal à la valeur courante du nombre n, le noeud voisin j n'est pas retenu comme candidat pour un attachement.

Le procédé suit la boucle 130 pour traiter le noeud j suivant dans la liste Li.

Si, à l'étape 132, il est constaté que le noeud j appartient à la composante connexe du noeud i, le traitement suivant est effectué.

A l'étape 140, le module d'attachement 40 détermine la longueur moyenne yj des chemins à travers sa composante connexe si elle était modifiée de manière à ce que le noeud i soit attaché au noeud j. Pour ce faire, le module d'attachement 40 modifie le graphe Gi en établissant un lien entre le noeud i et le noeud j et en rompant le lien courant entre le noeud i et le noeud k auquel le noeud i est actuellement attaché. En calculant la longueur moyenne des chemins entre les paires de noeuds de la composante connexe modifiée, le module d'attachement 40 détermine la valeur de yj.

A l'étape 142, si la longueur moyenne yj est supérieure ou égale à la valeur courante de la variable y, le procédé 100 suit la boucle 130 pour traiter le noeud j suivant dans la liste Li.

Si, en revanche, la longueur moyenne yj est inférieure à la valeur courante du paramètre y, à l'étape 146, la longueur moyenne yj est affectée à la variable y, et, à l'étape 148, l'identifiant j est affecté à la variable Id2.

A l'issue de l'étape 148, le procédé suit la boucle 130 pour traiter le noeud j suivant dans la liste Li.

Une fois que l'ensemble des entrées de la liste Li ont été traitées, le procédé 100 sort de la boucle 130 et se poursuit de la manière suivante.

A l'étape 152 est vérifié si l'identifiant id1 est nul. S'il n'est pas nul cela signifie qu'un noeud voisin j, n'appartenant pas à la composante connexe du noeud i, possède une composante connexe plus importante que celle du noeud i. Pour augmenter la taille de la composante connexe du noeud i, il est souhaitable que le noeud i s'attache au noeud j et rompe l'attachement en cours, si ce dernier existe.

Alors à l'étape 154, le module d'attachement 40 vérifie que la rupture du lien courant entre le noeud i et le noeud k n'auraient aucun impact sur les communications en cours. Pour ce faire, le module d'attachement 40 interroge le module de flux 60, qui, en réponse, lui transmet la liste Fi des flux de données qui transitent actuellement par ce noeud i. A partir de cette liste Fi, le module d'attachement 40 détermine le nombre fi de flux de données en cours (ou, en variante, le nombre de flux de données en cours pour chaque niveau de priorité).

A l'étape 156, le module d'attachement 40 vérifie que le nombre fi calculé à l'étape 154 ne dépasse pas un seuil prédéterminé.

En cas de dépassement du seuil, le procédé 100 est interrompu.

Si le seuil prédéterminé n'est pas dépassé, le noeud voisin candidat pour un attachement est retenu et la seconde partie du procédé passe à l'étape 158.

A l'étape 158, le module d'attachement 40 commande le module RT 30 pour qu'il rompe l'attachement en cours, lorsqu'un tel attachement existe, et qu'il initie le processus d'attachement avec le module AP 20 du noeud j sélectionné.

Si à l'étape 152, l'identifiant Id1 est nul, le module d'attachement 40 vérifie la valeur de l'identifiant id2, à l'étape 160.

Si id2 n'est pas nul, cela signifie qu'il est préférable que le noeud i soit attaché au noeud j sélectionné de manière à minimiser la longueur des chemins dans sa composante connexe.

Les étapes 154 et 156 sont exécutées pour déterminer s'il faut retenir le candidat Id2. Dans l'affirmative, l'étape 158 est réalisée pour rompre l'attachement en cours, lorsqu'un tel attachement existe, et initier le processus d'attachement avec le module AP 20 du noeud j sélectionné.

Si, à l'étape 160 l'identifiant Id2 est nul, la seconde partie 120 du procédé 100 s'achève.

Le procédé 100 est exécuté périodiquement par le module 40 à moins qu'entre deux exécutions « volontaires », le module RT 30 n'indique que l'attachement courant a été rompu et qu'il convient d'essayer d'en établir un nouveau. Dans ce cas, dès réception par le module d'attachement 40 d'un message de rupture de l'attachement courant, la seconde partie du procédé 100 est exécutée.

Par la mise en oeuvre du procédé 100, le module d'attachement 40 d'un noeud i est propre à sélectionner, sur la base d'informations de connectivité, un noeud voisin auquel il est souhaitable que le noeud i soit attaché et commande le module RT 30 en lui indiquant l'identifiant du noeud voisin auquel s'attacher.

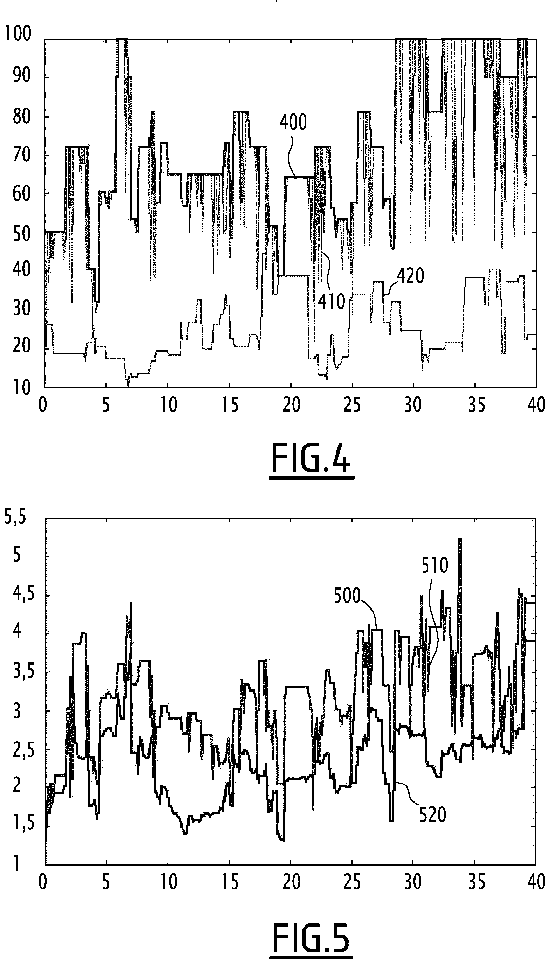

Sur les figures 4 et 5, les graphes 410 et 510 représentent respectivement le pourcentage de paires de noeuds pouvant échanger des données et la longueur moyenne des chemins dans un réseau mobile ad hoc à base de technologie cellulaire sans-fil dont chaque noeud met en oeuvre le procédé d'attachement 100 présenté ci-dessus. Ces graphes résultent d'une simulation numérique de l'évolution dans le temps de la topologie du réseau, au cours des déplacements des différents noeuds.

Selon cette simulation, la mise en oeuvre du procédé d'attachement 100 permet d'obtenir un réseau dont les graphes sont, à chaque instant, proches des graphes 400 et 500 du réseau optimal, défini en considérant que chaque noeud i est attaché à tous les noeuds j présents dans sa portée radio (c'est-à-dire qu'il n'y a pas de contrainte d'attachement unique).

Ceci par opposition aux graphes 420 et 520 qui correspondent en revanche à un réseau dans lequel chaque noeud met en oeuvre un procédé d'attachement dans lequel le noeud sélectionné est choisi de manière aléatoire parmi les noeuds voisins.

De nombreuses variantes du procédé d'attachement de la figure 3 sont envisageables. D'autres critères pourraient être testés par le module d'attachement d'un noeud i de manière à sélectionner ce qui constitue le meilleur noeud de son voisinage en termes de connectivité réseau. Par exemple, si les capacités de calcul d'un noeud s'avèrent suffisantes et si cela ne représente pas une surcharge sur le réseau, le signal de balise d'un noeud j peut contenir la liste gi des identifiants des noeuds de sa composante connexe, ou encore le graphe Gi complet de sa composante connexe. Le présent procédé d'attachement utilisant une information de connectivité peut être intégré dans un processus d'attachement plus complexe pour tenir compte de ces informations de connectivité supplémentaires.

Bien évidemment, des critères classiques, tels que la qualité du signal de balise reçu, peuvent être pris en compte dans le procédé d'attachement.

Lorsqu'un noeud comporte plusieurs modules RT, la seconde partie 120 du procédé d'attachement 100 est répétée pour chacun des modules RT.

Dans le mode de réalisation précédemment décrit, les informations de connectivité sont transmises en utilisant les moyens d'émission/réception radio, dont sont équipés les noeuds pour la mise en oeuvre de la technologie cellulaire sans-fil. En variante, des moyens de communication dédiés à l'échange des informations de connectivité sont prévus : il peut s'agir de la simple définition d'un canal de communication spécifique dans le cadre de la technologie cellulaire sans-fil mise en oeuvre, d'une autre technologie cellulaire, etc.

Il est à noter que, dans le mode de réalisation précédent, le réseau est homogène au sens où une unique technologie cellulaire sans-fil est mise en oeuvre. En variante, le réseau met en oeuvre simultanément plusieurs technologies cellulaires sans-fil.

De plus, de nombreuses variantes de mise en oeuvre du présent procédé d'attachement sont envisageables.

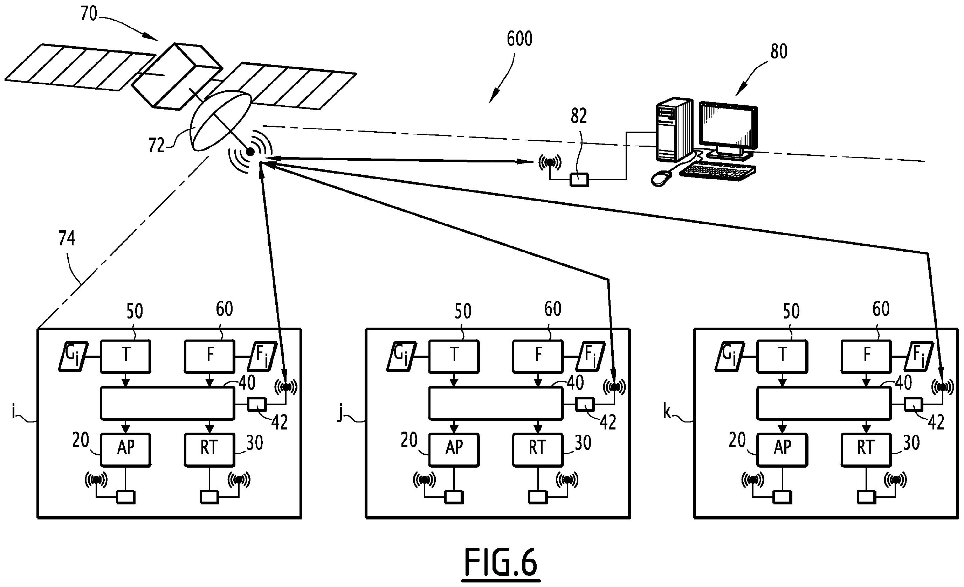

Par exemple, sur la figure 6, un système 600 a été représenté dans lequel chaque noeud i du réseau comporte, en plus des moyens 22 et 32 permettant d'émettre et de recevoir des ondes radio dans la bande de fréquence allouée à la technologie cellulaire sans-fil mise en oeuvre, un moyen d'émission/réception 42 dédié au module d'attachement 40'. Chaque noeud du réseau est ainsi connecté à un second réseau utilisant un protocole spécifique.

Ce second réseau comporte avantageusement une composante satellitaire. Le système comporte alors une station relais satellitaire 70, dont la couverture géographique s'étend sur l'ensemble de la zone géographique à l'intérieur de laquelle sont amenés à se déplacer les noeuds i du réseau.

Le système comporte enfin un central opérationnel 80 comportant un moyen permettant de connecter le central opérationnel au second réseau. Sur la figure 6, le central opérationnel est équipé d'un moyen d'émission/réception d'ondes radio 82 avec la composante satellitaire du second réseau.

Ainsi, une communication peut être établie, via la station relais satellitaire 70, entre un module d'attachement 40' de chaque noeud i du réseau et le central opérationnel 80.

Pour chaque noeud i, le central opérationnel 80 est propre à mettre en oeuvre le procédé d'attachement 100. Le module d'attachement 40' n'a alors qu'une fonction d'interface de communication entre le central opérationnel 80, d'une part, et les modules AP 20, RT 30, de topologie 50 et de flux 60 du noeud correspondant.

Ainsi, la liste Li générée par le module RT 30, le graphe Gi maintenu par le module de topologie 50 et la liste Fi des flux en cours maintenu par le module de flux 60 sont transmis par le module d'attachement 40' au central opérationnel 80.

A partir de ces informations de connectivité, le central opérationnel 80 sélectionne le noeud j auquel le noeud i doit s'attacher.

Une fois un noeud voisin j sélectionné, l'identifiant j de ce noeud est transmis du central opérationnel 80 vers le module d'attachement 40' du noeud i.

Le module d'attachement 40' commande alors le module RT 30 pour qu'il rompe l'attachement en cours (s'il existe) et initie le processus d'attachement avec le noeud voisin j sélectionné.

Dans ce système, de nombreuses variantes du procédé de sélection sont alors envisageables.

Dans une variante, le central opérationnel 80 dispose de chacun des graphes Gj des noeuds du réseau, obtenus lors de la réalisation de l'étape du procédé de sélection correspondant à l'étape 122, au niveau de chaque noeud j.

Il n'est alors plus nécessaire que le module d'attachement 40' d'un noeud j génère un message comportant des informations de connectivité autres que l'identifiant du noeud J.

Ainsi, lorsque le noeud i informe le central opérationnel 80 qu'il a détecté le signal de balise du noeud j, le central opérationnel 80 met en oeuvre le procédé d'attachement en utilisant le graphe Gj de la composante connexe du noeud j, que ce dernier a déjà transmis au central opérationnel 80.

Dans une autre variante indépendante de la précédente, après une première exécution du procédé d'attachement pour le noeud i, et une première exécution pour le noeud j, le central opérationnel exécute une seconde fois le procédé d'attachement pour le noeud i. Le procédé de sélection est ainsi répété plusieurs fois pour un ou plusieurs noeud(s) (à partir des mêmes informations de connectivité), jusqu'à convergence vers une topologie du réseau dans laquelle il n'y a plus de modification des attachements entre noeuds.

Dans encore une autre variante, le central opérationnel met en oeuvre un procédé d'attachement utilisant des critères globaux utilisant les informations de connectivité collectées auprès des noeuds. Ces critères consistent par exemple à maximiser une fonction de coût liée à la connectivité du réseau et dont les variables sont, entre autres, les informations de connectivité. Ainsi, bien que l'attachement d'un noeud i à un noeud j, dont le nombre nj est inférieur au nombre ni, ne soit pas localement jugé intéressant pour le noeud i, le central opérationnel peut requérir cet attachement et simultanément requérir l'attachement d'un noeud k de la composante connexe du noeud j avec un noeud I de la composante connexe du noeud i, pour atteindre globalement à une connectivité maximale du réseau.

Le présent procédé d'attachement est avantageusement mis en oeuvre pour former un réseau ad hoc en technologie LTE entre navires (« ship-to-ship » en anglais). Le module AP est un eNode B (pour « evolved Node B » en anglais) et le module RT est un équipement utilisateur UE (« User Equipment »). La technologie LTE peut avoir une portée de 10 noeuds nautiques en utilisant des moyens démission/réception comportant une antenne directionnelle, par exemple du type FESA™ (« Fast Electronically Steerable Antenna « en anglais), ou sectorielle.

Le réseau ad hoc entre navires peut éventuellement se connecter avec des noeuds situés sur la côte (« ship-to-shore » en anglais) en utilisant la même technologie.

Le présent procédé d'attachement est avantageusement mis en oeuvre pour former un réseau ad hoc déployable entre véhicules. Chaque véhicule est équipé d'un mât télescopique, par exemple de 18 m de haut, de manière à construire une infrastructure LTE déployable. Le réseau peut alors fournir de la connectivité à des piétons équipés de terminaux LTE ou à des aéronefs, comme des hélicoptères.

## Revendications

1. Procédé d'attachement (100) dans un réseau mobile ad hoc à base de technologie cellulaire sans fil, du type comportant une pluralité de noeuds (i), chaque noeud comportant un module de point d'accès (20), au moins un module de terminal relais (30), un module de terminal relais d'un noeud étant apte à découvrir le module de point d'accès de noeuds voisins et à initier un processus d'attachement avec un module de point d'accès d'un noeud voisin sélectionné, un module de terminal relais d'un noeud étant attaché à au plus un module de point d'accès d'un noeud voisin,
**caractérisé en ce qu'**il comporte une étape consistant à sélectionner un noeud voisin (j) vers lequel un noeud (i) considéré doit initier un processus d'attachement parmi les noeuds d'une liste (Li) résultant d'une étape de découverte, réalisée par le module de terminal relais (30) du noeud considéré, et sur la base d'au moins une information de connectivité relative à la composante connexe du noeud considéré et d'au moins une information de connectivité relative à la composante connexe de chaque noeud voisin de la liste.

2. Procédé selon la revendication 1, **caractérisé en ce que** ladite au moins une information de connectivité d'un noeud est choisie parmi un nombre (ni) de noeuds présents dans la composante connexe du noeud, une liste (gi) des identifiants des noeuds présents dans la composante connexe du noeud, et un graphe (Gi) de la composante connexe du noeud.

3. Procédé selon la revendication 1 ou la revendication 2, **caractérisé en ce que**, chaque noeud ayant un module de topologie (50) stockant un graphe (Gi) de la composante connexe du noeud (i), le procédé comporte une étape d'interrogation (122) du module de topologie pour obtenir le graphe (Gi) courant de la composante connexe du noeud (i), une étape de calcul de ladite au moins une information de connectivité et une étape de transmission de la ou de chaque information de connectivité calculée.

4. Procédé selon la revendication 3, **caractérisé en ce que** l'étape de transmission consiste à émettre (116), au moyen du module de point d'accès dudit noeud, un signal de balise comportant la ou chaque information de connectivité (i, ni, gi, Gi), et **en ce que** le procédé comporte, lors de l'étape de découverte par le module de terminal relais d'un noeud considéré, une étape de collecte de la ou de chaque information de connectivité d'un noeud voisin (j) dont un signal de balise a été détecté par ledit noeud considéré.

5. Procédé selon l'une quelconque des revendications 1 à 4, dans lequel l'étape consistant à sélectionner un noeud voisin comporte une étape de vérification (132) que le noeud voisin (j) n'appartient pas à la composante connexe du noeud considéré (i) et, dans l'affirmative, une étape de comparaison (134) du nombre (nj) de noeuds présents dans la composante connexe du noeud voisin (j) avec le nombre (ni) de noeuds présents dans la composante connexe du noeud considéré (i), le noeud voisin étant sélectionné lorsque le nombre de noeuds dans sa composante connexe est supérieur à celui dans la composante connexe du noeud considéré.

6. Procédé selon la revendication 5, comportant, dans lequel l'étape consistant à sélectionner un noeud voisin comporte une étape de vérification (132) que le noeud voisin (j) n'appartient pas à la composante connexe du noeud considéré (i) et, dans la négative, une étape de comparaison (142), d'une part, de la longueur moyenne (yi) des chemins dans la composante connexe du noeud considéré (i) et, d'autre part, de la longueur moyenne (yj) des chemins dans la composante connexe du noeud considéré modifiée de telle sorte que le noeud considéré soit attaché au noeud voisin, le noeud voisin étant sélectionné lorsque la longueur moyenne des chemins dans la composante connexe du noeud considéré modifiée est inférieure à la longueur moyenne (yi) des chemins dans la composante connexe du noeud considéré (i).

7. Procédé selon l'une quelconque des revendications 1 à 6, dans lequel, chaque noeud comportant un module de flux (60) maintenant une liste des flux de données (Fi) relatifs aux communications en cours relayées par ledit noeud récepteur (i), le procédé comporte, avant une étape consistant à commander le module de terminal relais du noeud considéré (i) pour initier un processus d'attachement vers le module de point d'accès du noeud voisin (j) sélectionné, une étape consistant à interroger le module de flux pour obtenir la liste des flux en cours, déterminer un nombre (fi) de flux de données en cours et vérifier que le nombre (fi) de flux en cours est inférieur à un seuil prédéterminé.

8. Procédé selon l'une quelconque des revendications 1 à 7, dans lequel l'étape de sélection est mise en oeuvre au niveau d'un central opérationnel, en communication avec chacun des noeuds du réseau et propre à transmettre à un noeud récepteur considéré l'identifiant du noeud voisin sélectionné auquel il doit se connecter.

9. Procédé selon l'une quelconque des revendications 1 à 7, dans lequel l'étape de sélection est mise en oeuvre au niveau de chaque noeud.

10. Support d'enregistrement d'informations, **caractérisé en ce qu'**il comporte les instructions pour la mise en oeuvre d'un procédé d'attachement conforme à l'une quelconque des revendications 1 à 9, lorsque ces instructions sont exécutées par un calculateur.

11. Système comportant une pluralité de noeuds (i), chaque noeud comportant un module de point d'accès, un module de terminal relais d'un noeud étant apte à découvrir le module de point d'accès des noeuds voisins et à initier un processus d'attachement avec un module de point d'accès d'un noeud voisin sélectionné, un module de terminal relais d'un noeud étant attaché à au plus un module de point d'accès d'un noeud voisin. **caractérisé en ce qu'**il est propre à mettre en oeuvre un procédé d'attachement conforme au procédé selon l'une quelconque des revendications 1 à 9, le système comportant un moyen de sélection propre à sélectionner un noeud voisin vers lequel un noeud récepteur considéré doit initier un processus d'attachement parmi les noeuds d'une liste résultant d'une étape de découverte, par le module de terminal relais du noeud récepteur, et en considérant au moins une information de connectivité relative à la composante connexe du noeud considéré et une information de connectivité relative à la composante connexe des noeuds voisins mentionnés dans la liste.

12. Système selon la revendication 11, dans lequel le module de point d'accès d'un noeud est propre à transmettre au moins une information de connectivité relative à sa composante connexe en utilisant un moyen d'émission /réception radio du module AP ou en utilisant un moyen d'émission/réception d'une autre technologie radio que celle mise en oeuvre pour le réseau ad hoc.

## Patentansprüche

1. Verbindungsverfahren (100) in einem Ad-Hoc-Mobilnetz auf Grundlage einer drahtlosen zellularen Technik, von der Art aufweisend eine Mehrzahl von Knoten (i), wobei jeder Knoten aufweist ein Zugangspunktmodul (20), mindestens ein Relais-Endgerätmodul (30), wobei ein Relais-Endgerätmodul eines Knotens dazu eingerichtet ist, das Zugangspunktmodul (20) von benachbarten Knoten aufzufinden und einen Verbindungsvorgang mit einem Zugangspunktmodul eines ausgewählten benachbarten Knotens zu initiieren, wobei ein Relais-Endgerätmodul eines Knotens mit höchstens einem Zugangspunktmodul eines benachbarten Knotens verbunden ist,
**gekennzeichnet dadurch, dass** es einen Schritt aufweist, welcher umfasst ein Auswählen eines benachbarten Knotens (j), zu welchem ein betrachteter Knoten (i) einen Verbindungsvorgang initiieren soll, aus den Knoten einer Liste (Li), die resultiert aus einem Schritt des Auffindens, welcher durch das Relais-Endgerätmodul (30) des betrachteten Knotens umgesetzt wird, und auf der Grundlage von mindestens einer Konnektivitätsinformation bezüglich der Zusammenhangskomponente des betrachteten Knotens und von mindestens einer Konnektivitätsinformation bezüglich der Zusammenhangskomponente jedes benachbarten Knotens der Liste.

2. Verfahren gemäß dem Anspruch 1, **gekennzeichnet dadurch, dass** die mindestens eine Konnektivitätsinformation eines Knotens aus einer Zahl (ni) von Knoten, welche in der Zusammenhangskomponente des Knotens vorhanden sind, einer Liste (gi) von Kennungen der Knoten, welche in der Zusammenhangskomponente des Knotens vorhanden sind, und einen Graph (Gi) der Zusammenhangskomponente des Knotens ausgewählt ist.

3. Verfahren gemäß dem Anspruch 1 oder dem Anspruch 2, **gekennzeichnet dadurch, dass** jeder Knoten ein Topologiemodul (50) aufweist, welches einen Graph (Gi) der Zusammenhangskomponente des Knotens (i) speichert, wobei das Verfahren ferner einen Schritt des Abfragens (122) des Topologiemoduls zum Erhalten des aktuellen Graphs (Gi) der Zusammenhangskomponente des Knotens (i), einen Schritt des Berechnens der mindestens einen Konnektivitätsinformation und einen Schritt des Übertragens der oder jeder berechneten Konnektivitätsinformation aufweist.

4. Verfahren gemäß dem Anspruch 3, **gekennzeichnet dadurch, dass** der Schritt des Übertragens ein Aussenden (116), mittels des Zugangspunktmoduls des Knotens, eines Bakensignals, welches die oder jede Konnektivitätsinformation (i, ni, gi, Gi) enthält, umfasst, und dadurch, dass das Verfahren aufweist, beim Schritt des Auffindens durch das Relais-Endgerätmodul eines betrachteten Knotens, einen Schritt des Sammelns der oder jeder Konnektivitätsinformation eines benachbarten Knotens (j), dessen Bakensignal durch den betrachteten Knoten detektiert wurde.

5. Verfahren gemäß irgendeinem der Ansprüche 1 bis 4, wobei der Schritt, welcher Auswählen eines benachbarten Knotens umfasst, aufweist einen Schritt der Verifikation (132), ob der benachbarte Knoten (j) nicht zu der Zusammenhangskomponente des betrachteten Knotens (i) gehört, und, wenn ja, einen Schritt des Vergleichens (134) der Zahl (nj) von Knoten, welche in der Zusammenhangskomponente des benachbarten Knotens (j) vorhanden sind, mit der Zahl (ni) von Knoten, welche in der Zusammenhangskomponente des betrachteten Knotens (i) vorhanden sind, wobei der benachbarte Knoten ausgewählt wird, wenn die Zahl von Knoten in dessen Zusammenhangskomponente größer ist als diejenige in der Zusammenhangskomponente des betrachteten Knotens (i).

6. Verfahren gemäß dem Anspruch 5, wobei der Schritt, welcher Auswählen eines benachbarten Knotens umfasst, aufweist einen Schritt der Verifikation (132), ob der benachbarte Knoten (j) nicht zu der Zusammenhangskomponente des betrachteten Knotens (i) gehört, und, wenn nein, einen Schritt des Vergleichens (142) von einerseits der durchschnittlichen Länge (yi) von Pfaden in der Zusammenhangskomponente des betrachteten Knotens (i) und andererseits der durchschnittlichen Länge (yj) von Pfaden in der Zusammenhangskomponente des betrachteten Knotens, welche derart modifiziert ist, dass der betrachtete Knoten mit dem benachbarten Knoten verbunden wird, wobei der benachbarte Knoten ausgewählt wird, wenn die durchschnittliche Länge der Pfade in der modifizierten Zusammenhangskomponente des betrachteten Knotens kleiner ist als die durchschnittliche Länge (yi) der Pfade in der Zusammenhangskomponente des betrachteten Knotens (i).

7. Verfahren gemäß irgendeinem der Ansprüche 1 bis 6, wobei jeder Knoten ein Ströme-Modul (60) aufweist, welches eine Liste von Datenströmen (Fi) bezüglich laufender Verbindungen, welche durch den Empfangsknoten (i) weitergeleitet werden, führt, wobei das Verfahren einen Schritt, welcher Abfragen des Ströme-Moduls zum Erhalten der Laufende-Ströme-Liste, Ermitteln einer Zahl (fi) von laufenden Datenströmen und Verifizieren, ob die Zahl (fi) von laufenden Strömen kleiner als ein vorbestimmter Schwellenwert ist, umfasst, aufweist vor einem Schritt, der Steuern des Relais-Endgerätmoduls des betrachteten Knotens (i) zum Initiieren eines Verbindungsvorgangs mit dem Zugangspunktmodul eines ausgewählten benachbarten Knotens (j) umfasst.

8. Verfahren gemäß irgendeinem der Ansprüche 1 bis 7, wobei der Schritt des Auswählens auf Ebene einer Betriebszentrale durchgeführt wird, welche mit jedem der Knoten des Netzes in Verbindung steht und dazu geeignet ist, an einen betrachteten Empfangsknoten die Kennung eines ausgewählten benachbarten Knotens, mit welchem er sich verbinden soll, zu senden.

9. Verfahren gemäß irgendeinem der Ansprüche 1 bis 7, wobei der Schritt des Auswählens auf Ebene jedes Knotens durchgeführt wird.

10. Informationsaufzeichnungsmedium, **gekennzeichnet dadurch, dass** es aufweist die Befehle zum Durchführen eines Verbindungsverfahrens gemäß irgendeinem der Ansprüche 1 bis 9, wenn diese Befehle durch einen Rechner ausgeführt werden.

11. System, aufweisend eine Mehrzahl von Knoten (i), wobei jeder Knoten ein Zugangspunktmodul aufweist, wobei ein Relais-Endgerätmodul eines Knotens dazu eingerichtet ist, das Zugangspunktmodul benachbarter Knoten aufzufinden und einen Verbindungsvorgang mit einem Zugangspunktmodul eines ausgewählten benachbarten Knotens zu initiieren, wobei ein Relais-Endgerätmodul eines Knotens mit höchstens einem Zugangspunktmodul eines benachbarten Knotens verbunden ist,
**gekennzeichnet dadurch, dass** es dazu geeignet ist, ein Verbindungsverfahren entsprechend dem Verfahren nach irgendeinem der Ansprüche 1 bis 9 durchzuführen, wobei das System ein Auswählmittel aufweist, welches dazu geeignet ist, einen benachbarten Knoten, zu welchem ein betrachteter Empfangsknoten einen Verbindungsvorgang initiieren soll, auszuwählen aus den Knoten einer Liste, die resultiert aus einem Schritt des Auffindens durch das Relais-Endgerätmodul des Empfangsknotens, und unter Berücksichtigung von mindestens einer Konnektivitätsinformation bezüglich der Zusammenhangskomponente des betrachteten Knotens und von mindestens einer Konnektivitätsinformation bezüglich der Zusammenhangskomponente der benachbarten Knoten, welche in der Liste aufgeführt sind.

12. System gemäß dem Anspruch 11, wobei das Zugangspunktmodul eines Knotens dazu geeignet ist, mindestens eine Konnektivitätsinformation bezüglich dessen Zusammenhangskomponente unter Verwendung eines Funk-Sende/Empfang-Mittels des Moduls AP oder unter Verwendung eines Mittels zum Senden/Empfangen von einer anderen Funktechnik wie die, welche für das Ad-Hoc-Netzwerk umgesetzt wird, zu übertragen.

## Claims

1. An attachment method (100) in an ad hoc mobile network based on wireless cellular technology, of the type including a plurality of nodes (i), each node including an access point module (20), at least one relay terminal module (30), a relay terminal module of one node being able to discover the access point module of neighboring nodes and initiate an attachment process with an access point module of a selected neighboring node, a relay terminal module of one node being attached at most to one access point module of a neighboring node,
**characterised in that** it includes a step consisting of selecting a neighboring node (j) to which a considered node (i) must initiate an attachment process among the nodes from a list (Li) resulting from a discovery step, carried out by the relay terminal module (30) of the considered node, and based on at least a piece of connectivity information relative to the connected component of the considered node and at least a piece of connectivity information relative to the connected component of each neighboring node of the list.

2. The method according to claim 1, **characterised in that** said at least one piece of connectivity information of a node is chosen from among a number (ni) of nodes present in the connected component of the node, a list (gi) of identifiers of the nodes present in the connected component of the node, and a graph (Gi) of the connected component of the node.

3. The method according to claim 1 or claim 2, **characterized in that**, each node having a topology module (50) storing a graph (Gi) of the connected component of the node (i), the method includes a step (122) for querying the topology module in order to obtain the current graph (Gi) of the connected component of the node (i), a step for computing said at least one piece of connectivity information and a step for transmitting the or each computed piece of connectivity information.

4. The method according to claim 3, **characterized in that** the transmission step consists of transmitting (116), via the access point module of said node, a beacon signal including the or each piece of connectivity information (i, ni, gi, Gi), and **in that** the method includes, during the discovery step by the relay terminal module of the considered node, a step for collecting the or each piece of connectivity information of a neighboring node (j) whereof a beacon signal has been detected by said considered node.

5. The method according to any one of claims 1 to 4, wherein the step consisting of selecting a neighboring node includes a step (132) for verifying that the neighboring node (j) does not belong to the connected component of the considered node (i) and, in the affirmative, a step (134) for comparing the number (nj) of nodes present in the connected component of the neighboring node (j) with the number (ni) of nodes present in the connected component of the considered node (i), the neighboring node being selected when the number of nodes in its connected component is greater than that of the connected component of the considered node.

6. The method according to claim 5, including, in the step consisting of selecting a neighboring node includes a step for verifying (132) that the neighboring node (j) does not belong to the connected component of the considered node (i) and, in the negative, a step for comparing (142), on the one hand, the mean length (yi) of the paths between the connected component of the considered node (i) and, on the other hand, the mean length (yj) of the paths in the connected component of the considered node, modified such that the considered node is attached to the neighboring node, the neighboring node being selected when the mean length of the paths in the connected component of the modified considered node is smaller than the mean length (yi) of the paths in the connected component of the considered node (i).

7. The method according to any one of claims 1 to 6, wherein, each node including a stream module (60) maintaining a list (Fi) of the data streams relative to the communications in progress relayed by said receiving node (i), the method includes, before a step consisting of commanding the relay terminal module of the considered node (i) to initiate an attachment process to the access point module of the selected neighboring node (j), a step consisting of querying the stream module in order to obtain the list of streams in progress, determine the number (fi) of data streams in progress and verify that the number (fi) of streams in progress is below a predetermined threshold.

8. The method according to any one of claims 1 to 7, wherein the selection step is carried out at a central operational unit, in communication with each of the nodes of the network and able to transmit, to a considered receiving node, the identifier of the selected neighboring node to which it must connect.

9. The method according to any one of claims 1 to 7, wherein the selection step is carried out at each node.

10. An information recording medium, **characterised in that** it includes the instructions for implementing attachment method according to any one of claims 1 to 9, when those instructions are executed by a computer.

11. A system including a plurality of nodes (i), each node including an access point module, a relay terminal module of a node being able to discover the access point module of the neighboring nodes and initiate an attachment process with an access point module of a selected neighboring node, a relay terminal module of a node being attached to at least one access point module of a neighboring node,
**characterised in that** it is able to carry out an attachment method according to the method according to any one of claims 1 to 9, the system including a selection means capable of selecting a neighboring node to which a considered receiving node must initiate an attachment process among the nodes from a list resulting from a discovery step, by the relay terminal module of the receiving node, and considering at least one piece of connectivity information relative to the connected component of the considered node and one piece of connectivity information relative to the connected component of the neighboring nodes mentioned in the list.

12. The system according to claim 11, wherein the access point module of one node is able to send at least one piece of connectivity information relative to its connected component using a wireless transceiver means of the AP module or using a transceiver means of a radio technology other than that implemented for the ad hoc network.
